(19) Europäisches Patentamt
European Patent Office
Office européen des brevets

(11) **EP 4 653 915 A1**

(12) **EUROPEAN PATENT APPLICATION**
published in accordance with Art. 153(4) EPC

(43) Date of publication:
**26.11.2025 Bulletin 2025/48**

(21) Application number: **24744097.7**

(22) Date of filing: **05.01.2024**

(51) International Patent Classification (IPC):
**G01S 7/497** (2006.01)

(52) Cooperative Patent Classification (CPC):
**G01S 7/48; G01S 7/497; G01S 17/08; G01S 17/58**

(86) International application number:
**PCT/CN2024/070790**

(87) International publication number:
**WO 2024/152921 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 CN 202310104626**

(71) Applicant: **Shenzhen Yinwang Intelligent Technologies Co., Ltd.**
**Shenzhen, Guangdong 518110 (CN)**

(72) Inventors:
• **XIE, Huan**
  **Shenzhen, Guangdong 518129 (CN)**
• **SHI, Xianling**
  **Shenzhen, Guangdong 518129 (CN)**
• **WU, Hongying**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **SIGNAL PROCESSING METHOD AND RELATED APPARATUS**

(57)     Embodiments of this application provide a signal processing method and a related apparatus, and relate to the field of optoelectronic technologies. The method includes: determining a first frequency modulated signal; sending the first frequency modulated signal to a laser, so that the laser generates a first laser signal based on the first frequency modulated signal; obtaining a first feedback signal, where the first feedback signal is a part, corresponding to a first time period, of the first laser signal; determining a first predistortion signal based on the first frequency modulated signal and the first feedback signal; and adjusting a parameter of the laser based on the first predistortion signal, so that the laser generates a second laser signal based on the first frequency modulated signal. Based on this solution, nonlinearity of laser frequency modulation can be accurately corrected in real time, to help improve accuracy of target object detection performed by the laser.

S510: Determine a first frequency modulated signal

S520: Send the first frequency modulated signal to a laser, so that the laser generates a first laser signal based on the first frequency modulated signal

S530: Obtain a first feedback signal, where the first feedback signal is a part, corresponding to a first time period, of the first laser signal

S540: Determine a first predistortion signal based on the first frequency modulated signal and the first feedback signal

S550: Adjust a parameter of the laser based on the first predistortion signal, so that the laser generates a second laser signal based on the first frequency modulated signal

FIG. 5

## Description

This application claims priority to Chinese Patent Application No. 202310104626.6, filed with the China National Intellectual Property Administration on January 20, 2023 and entitled "SIGNAL PROCESSING METHOD AND RELATED APPARATUS", which is incorporated herein by reference in its entirety.

## TECHNICAL FIELD

This application relates to the field of optoelectronic technologies, and more specifically, to a signal processing method and a related apparatus.

## BACKGROUND

A lidar is one of the most important sensors in an autonomous driving system. A frequency modulated continuous wave (frequency modulated continuous wave, FMCW) radar is a common radar system in an automotive radar, and the FMCW radar can achieve functions such as target ranging and target speed measurement. Ranging is used as an example. The FMCW radar solves a distance by using a stable beat frequency signal formed by a frequency modulated laser signal and an echo signal. Based on an FMCW ranging principle, to achieve a high ranging resolution, a ranging system based on the FMCW radar needs to ensure high frequency modulation linearity. However, due to many non-ideal factors, in an actual application scenario, frequency modulation of a lidar is usually non-linear, which greatly limits ranging precision. The same is true in detection scenarios such as speed measurement.

Therefore, how to accurately correct nonlinearity of laser frequency modulation in real time is a problem to be urgently resolved.

## SUMMARY

Embodiments of this application provide a signal processing method and a related apparatus, so that a first predistortion signal can be determined based on a first frequency modulated signal and a first feedback signal corresponding to a specific time period. In this way, nonlinearity of laser frequency modulation can be accurately corrected in real time.

According to a first aspect, a signal processing method is provided. The method includes: determining a first frequency modulated signal; sending the first frequency modulated signal to a laser, so that the laser generates a first laser signal based on the first frequency modulated signal; obtaining a first feedback signal, where the first feedback signal is a part, corresponding to a first time period, of the first laser signal; determining a first predistortion signal based on the first frequency modulated signal and the first feedback signal; and adjusting a parameter of the laser based on the first predistortion signal, so that the laser generates a second laser signal based on the first frequency modulated signal.

For example, the first time period may be a short time period, or may be a time point, namely, a first moment. The first time period may be a current time period or a historical time period, and correspondingly, the first moment may be a current moment or a historical moment.

For example, signals that are not transmitted by the laser, such as the first frequency modulated signal, the first feedback signal, and the first predistortion signal, are all electrical signals in a signal processing system, and the first laser signal transmitted by the laser is an optical signal.

For example, a manner of updating a predistortion signal of the first laser signal includes selection of fast update, slow update, and no update in a specified time period. Therefore, if an external environment changes sharply, it is required that an update speed of the predistortion signal can keep up with the change, to ensure a correction tracking capability. If an external environment is stable, correspondingly, the predistortion signal is also stable. In this case, slow update or no update in a specified time period may be strategically considered.

For example, laser frequency modulation behavior may be modeled from a time domain perspective or a frequency domain perspective.

Based on the foregoing technical solution, the part, corresponding to the first time period or even the first moment, of the first laser signal is used as the first feedback signal, and the first predistortion signal is determined based on the first feedback signal, so that correction compensation can be performed on the first laser signal, enhancing accuracy of lidar-based target detection.

With reference to the first aspect, in some implementations of the first aspect, before determining the first predistortion signal based on the first frequency modulated signal and the first feedback signal, the method further includes: adjusting the first feedback signal by using the first frequency modulated signal as a reference, so that a delay of the first feedback signal is aligned with that of the first frequency modulated signal and/or a gain of the first feedback signal is aligned with that of the first frequency modulated signal.

Based on the foregoing technical solution, the first feedback signal can be aligned with the first frequency modulated signal based on a time-frequency relationship, enhancing signal processing accuracy.

With reference to the first aspect, in some implementations of the first aspect, determining the first predistortion signal based on the first frequency modulated signal and the first feedback signal includes: performing fast Fourier transform FFT on the first frequency modulated signal, to determine a second frequency modulated signal; performing FFT on the first feedback signal, to determine a second feedback signal; inputting the second frequency modulated signal and the second feedback signal to a first compensation model, to determine a first model parameter, where the first compensation model includes an error signal term and a model parameter term, the error signal term is determined based on a deviation between the second frequency modulated signal and the second feedback signal, the model parameter term includes the first model parameter and a frequency domain basis function, the first model parameter is determined when iteration calculation of the first compensation model meets an iteration termination condition, and the iteration termination condition includes that a vector difference between the error signal term and the model parameter term in vector space is a zero vector; determining a second predistortion signal based on the first model parameter; and performing inverse fast Fourier transform (inverse fast fourier transform, IFFT) on the second predistortion signal, to determine the first predistortion signal.

For example, the first frequency modulated signal may be a frequency modulated signal with a large frequency modulation period. In this case, according to an existing digital predistortion (digital predistortion, DPD) method, it is difficult to ensure accuracy of determining a predistortion signal based on the frequency modulated signal corresponding to the first time period.

For example, a signal expression of the second predistortion signal may be determined based on the second frequency modulated signal and the second feedback signal through modeling from a frequency domain perspective, so that a signal expression of the first predistortion signal can be determined. In view of this, after parameters of the signal expression are determined, the expression of the current first predistortion signal can be quickly determined.

Based on the foregoing technical solution, in a process of signal processing in frequency domain, because the frequency domain is not limited by a time domain constraint, only several orders of signals need to be selected from a frequency domain signal to accurately solve the model parameter, and determine the first predistortion signal, so that quasi-real-time correction compensation for the first laser signal can be implemented. This ensures accuracy of correcting the frequency modulated signal while improving real-time performance of correcting the frequency modulated signal.

With reference to the first aspect, in some implementations of the first aspect, the first model parameter is expressed by Formula (1) below:

$$\hat{c}_l^{(n)} = \hat{c}_l^{(n-1)} + \mu \cdot \hat{e}^{(n-1)}(f) \cdot \sum_l G_l(f) \tag{1}$$

where

$\hat{c}_l^{(n)}$ represents a first model parameter corresponding to an $l^{th}$ model item in an $n^{th}$ iteration, $n \in [1, N]$, N represents a quantity of iterations corresponding to the first model parameter when iterative calculation of the first compensation model meets the iteration termination condition, $\hat{c}_l^{(n-1)}$ represents a first model parameter corresponding to the $l^{th}$ model item in an $(n-1)^{th}$ iteration, $\mu$ represents an iteration step, $\hat{e}^{(n-1)}(f)$ represents an error of the second feedback signal relative to the second frequency modulated signal in the $(n-1)^{th}$ iteration, and $G_l(f)$ represents a frequency domain basis function corresponding to the $l^{th}$ model item.

For example, the first model parameter may include an amplitude and a phase shift value of the second frequency modulated signal.

Based on the foregoing technical solution, the first model parameter is expressed by a determined iteration formula. Because all variables except the first model parameter can be obtained, the first model parameter can be directly determined through iterative calculation, so that the first compensation model can be quickly converged.

With reference to the first aspect, in some implementations of the first aspect, the second predistortion signal is expressed by Formula (2) below:

$$\hat{s}_{dpd}^{(n)}(f) = \hat{s}_0(f) + \sum_l \hat{c}_l^{(n)} G_l(\hat{s}_0(f)) \tag{2}$$

where

$\hat{s}_{dpd}^{(n)}(f)$ represents the second predistortion signal obtained through $n$ iterations, $\hat{c}_l^{(n)}$ represents the first model parameter corresponding to the $l^{th}$ model item in the $n^{th}$ iteration, $n \in [1, N]$, N represents the quantity of iterations corresponding to the first model parameter when iterative calculation of the first compensation model meets the iteration termination condition, and $\hat{s}_0(f)$ represents the second frequency modulated signal.

Based on the foregoing technical solution, the second predistortion signal is expressed by a determined formula. Therefore, after the first model parameter is determined, an expression of the second predistortion signal can be directly obtained. Calculation efficiency is high. In addition, the expression can represent a complete signal, so that real-time performance and accuracy of laser correction are ensured.

With reference to the first aspect, in some implementations of the first aspect, the method further includes: representing the second frequency modulated signal and the second feedback signal through Fourier series expansion; determining, based on the second frequency modulated signal and the second feedback signal that are represented through Fourier series expansion, amplitude and phase compensation parameters corresponding to the second frequency modulated signal and the second feedback signal, where the amplitude and phase compensation parameters belong to the first model parameter; and determining the second predistortion signal based on the amplitude and phase compensation parameters.

For example, after the amplitude and phase compensation parameters are determined, a signal expression of a general second predistortion signal may be determined, and the expression may be expressed by Formula (3) below:

$$s_{dpb}^{(n)} = \sum_{k=1,2,\dots}^{N} -\frac{8}{\pi^2} \cdot A_k^{(n)} \cdot \cos(k \cdot 2\pi f_0 A_1^{(0)} \cdot t + P_k^{(n)}) \qquad (3),$$

where

$s_{dpb}^{(n)}$ represents the second predistortion signal obtained through n iterations, $A_k^{(n)}$ represents an amplitude of the second frequency modulated signal in an $n^{th}$ iteration of a $k^{th}$ model term, and belongs to the amplitude and phase compensation parameters, $f_0$ represents a frequency of the second frequency modulated signal, $P_k^{(n)}$ represents a phase shift value of the second frequency modulated signal in the $n^{th}$ iteration of the $k^{th}$ model term, and belongs to the amplitude and phase compensation parameters, and t represents time.

Based on the foregoing technical solution, a signal model expression of the second predistortion signal can be further determined through Fourier series expansion. Therefore, after each parameter in the signal model expression is obtained in real time, the second predistortion signal can be determined in real time based on the signal model expression. This reduces complexity of solving the first model parameter and determining the second predistortion signal, and further improves real-time performance of correcting the frequency modulated signal.

With reference to the first aspect, in some implementations of the first aspect, before inputting the second frequency modulated signal and the second feedback signal to the first compensation model, the method further includes: intercepting the second frequency modulated signal and the second feedback signal that are in a low-order bandwidth.

For example, in the time domain, a signal of a region of interest (region of interest, ROI) in the time domain may be selected, and a frequency modulated signal of an inflection point part for frequency modulation of the laser is ignored.

For example, in the frequency domain, band-limited processing may be performed on a frequency in the frequency domain, including but not limited to direct truncation or filtering by a filter.

Based on the foregoing technical solution, the first frequency modulated signal and the first feedback signal that are in a lower order bandwidth are intercepted to determine the first predistortion signal, so that a model order can be reduced, and computational power overheads can be reduced. In one aspect, due to factors such as resonance in a high frequency of laser frequency modulation, a frequency modulation response is inaccurate, and high frequency correction may cause performance deterioration. In another aspect, a high-frequency part is not a main factor that affects linearity performance of laser frequency modulation. Therefore, band-limited processing in frequency domain can improve correction accuracy and reduce model calculation complexity.

According to a second aspect, a signal processing apparatus is provided. The apparatus includes: a determining unit, configured to determine a first frequency modulated signal; a sending unit, configured to send the first frequency modulated signal to a laser, so that the laser generates a first laser signal based on the first frequency modulated signal; an obtaining unit, configured to obtain a first feedback signal, where the first feedback signal is a part, corresponding to a first time period, of the first laser signal; and a processing unit, configured to determine a first predistortion signal based on the first frequency modulated signal and the first feedback signal; and adjust a parameter of the laser based on the first predistortion signal, so that the laser generates a second laser signal based on the first frequency modulated signal.

Based on the foregoing technical solution, a part, corresponding to the first time period or even a first moment, of the first laser signal is used as the first feedback signal, and the first predistortion signal is determined based on the first feedback signal, so that correction compensation can be performed on the first laser signal, enhancing accuracy of lidar-based target detection.

With reference to the second aspect, in some implementations of the second aspect, the processing unit is further configured to: adjust the first feedback signal by using the first frequency modulated signal as a reference, so that a delay of the first feedback signal is aligned with that of the first frequency modulated signal and/or a gain of the first feedback signal is aligned with that of the first frequency modulated signal.

Based on the foregoing technical solution, the first feedback signal can be aligned with the first frequency modulated signal based on a time-frequency relationship, enhancing signal processing accuracy.

With reference to the second aspect, in some implementations of the second aspect, the processing unit is specifically configured to: perform fast Fourier transform FFT on the first frequency modulated signal, to determine a second frequency modulated signal; perform FFT on the first feedback signal, to determine a second feedback signal; input the second frequency modulated signal and the second feedback signal to a first compensation model, to determine a first model parameter, where the first compensation model includes an error signal term and a model parameter term, the error signal term is determined based on a deviation between the second frequency modulated signal and the second feedback signal, the model parameter term includes the first model parameter and a frequency domain basis function, the first model parameter is determined when iteration calculation of the first compensation model meets an iteration termination condition, and the iteration termination condition includes that a vector difference between the error signal term and the model parameter term in vector space is a zero vector; determine a second predistortion signal based on the first model parameter; and perform inverse fast Fourier transform IFFT on the second predistortion signal, to determine the first predistortion signal.

Based on the foregoing technical solution, in a process of signal processing in frequency domain, because the frequency domain is not limited by a time domain constraint, only several orders of signals need to be selected from a frequency domain signal to accurately solve the model parameter, and determine the first predistortion signal, so that quasi-real-time correction compensation for the first laser signal can be implemented. This ensures accuracy of correcting the frequency modulated signal while improving real-time performance of correcting the frequency modulated signal.

With reference to the second aspect, in some implementations of the second aspect, the first model parameter is expressed by Formula (4) below:

$$\hat{c}_l^{(n)} = \hat{c}_l^{(n-1)} + \mu \cdot \hat{e}^{(n-1)}(f) \cdot \sum_l G_l(f) \tag{4},$$

where

$\hat{c}_l^{(n)}$ represents a first model parameter corresponding to an $l^{th}$ model item in an $n^{th}$ iteration, $n \in [1, N]$, N represents a quantity of iterations corresponding to the first model parameter when iterative calculation of the first compensation model meets the iteration termination condition, $\hat{c}_l^{(n-1)}$ represents a first model parameter corresponding to the $l^{th}$ model item in an $(n-1)^{th}$ iteration, $\mu$ represents an iteration step, $\hat{e}^{(n-1)}(f)$ represents an error of the second feedback signal relative to the second frequency modulated signal in the $(n-1)^{th}$ iteration, and $G_l(f)$ represents a frequency domain basis function corresponding to the $l^{th}$ model item.

Based on the foregoing technical solution, the first model parameter is expressed by a determined iteration formula. Because all variables except the first model parameter can be obtained, the first model parameter can be directly determined through iterative calculation, so that the first compensation model can be quickly converged.

With reference to the second aspect, in some implementations of the second aspect, the second predistortion signal is expressed by Formula (5) below:

$$\hat{s}_{dpd}^{(n)}(f) = \hat{s}_0(f) + \sum_l \hat{c}_l^{(n)} G_l(\hat{s}_0(f)) \tag{5},$$

where

$\hat{s}_{dpd}^{(n)}(f)$ represents the second predistortion signal obtained through $n$ iterations, $\hat{c}_l^{(n)}$ represents the first model parameter corresponding to the $l^{th}$ model item in the $n^{th}$ iteration, $n \in [1, N]$, N represents the quantity of iterations corresponding to the first model parameter when iterative calculation of the first compensation model meets the iteration termination condition, and $\hat{s}_0(f)$ represents the second frequency modulated signal.

Based on the foregoing technical solution, the second predistortion signal is expressed by a determined formula. Therefore, after the first model parameter is determined, an expression of the second predistortion signal can be directly obtained. Calculation efficiency is high. In addition, the expression can represent a complete signal, so that quasi-real-time performance and accuracy of laser correction are ensured.

With reference to the second aspect, in some implementations of the second aspect, the processing unit is further configured to: represent the second frequency modulated signal and the second feedback signal through Fourier series expansion; determine, based on the second frequency modulated signal and the second feedback signal that are represented through Fourier series expansion, amplitude and phase compensation parameters corresponding to the second frequency modulated signal and the second feedback signal, where the amplitude and phase compensation parameters belong to the first model parameter; and determine the second predistortion signal based on the amplitude and phase compensation parameters.

For example, after the amplitude and phase compensation parameters are determined, a signal expression of a general second predistortion signal may be determined, and the expression may be expressed by Formula (6) below:

$$s_{dpb}^{(n)} = \sum_{k=1,2,...}^{N} -\frac{8}{\pi^2} \cdot A_k^{(n)} \cdot \cos(k \cdot 2\pi f_0 A_1^{(0)} \cdot t + P_k^{(n)}) \qquad (6),$$

where

$s_{dpb}^{(n)}$ represents the second predistortion signal obtained through n iterations, $A_k^{(n)}$ represents an amplitude of the second frequency modulated signal in an $n^{th}$ iteration of a $k^{th}$ model term, and belongs to the amplitude and phase compensation parameters, $f_0$ represents a frequency of the second frequency modulated signal, $P_k^{(n)}$ represents a phase shift value of the second frequency modulated signal in the $n^{th}$ iteration of the $k^{th}$ model term, and belongs to the amplitude and phase compensation parameters, and t represents time.

Based on the foregoing technical solution, a signal model expression of the second predistortion signal can be further determined through Fourier series expansion. Therefore, after each model parameter in the signal model expression is obtained in real time, the second predistortion signal can be determined in real time based on the signal model expression. This reduces complexity of solving the first model parameter and determining the second predistortion signal, and further improves real-time performance of correcting the frequency modulated signal.

With reference to the second aspect, in some implementations of the second aspect, the processing unit is further configured to: intercept the second frequency modulated signal and the second feedback signal that are in a low-order bandwidth before the second frequency modulated signal and the second feedback signal are input into the first compensation model.

Based on the foregoing technical solution, the first frequency modulated signal and the first feedback signal that are in a lower order bandwidth are intercepted to determine the first predistortion signal, so that a model order can be reduced, and computational power overheads can be reduced. In one aspect, due to factors such as resonance in a high frequency of laser frequency modulation, a frequency modulation response is inaccurate, and high frequency correction may cause performance deterioration. In another aspect, a high-frequency part is not a main factor that affects linearity performance of laser frequency modulation. Therefore, band-limited processing in frequency domain can improve correction accuracy and reduce model calculation complexity.

According to a third aspect, a signal processing apparatus is provided, including a processor and a memory. The processor is connected to the memory, the memory is configured to store program code, and the processor is configured to invoke the program code to perform the method according to any one of the possible implementations of the method design in the first aspect.

According to a fourth aspect, a chip system is provided. The chip system is used in an electronic device. The chip system includes one or more interface circuits and one or more processors. The interface circuit and the processor are interconnected through a line. The interface circuit is configured to: receive a signal from a memory of the electronic device and send the signal to the processor, where the signal includes computer instructions stored in the memory. When the processor executes the computer instructions, the electronic device performs the method according to any one of the possible implementations of the method design in the first aspect.

According to a fifth aspect, a computer-readable storage medium is provided, and stores a computer program or instructions. The computer program or the instructions are used for implementing the method according to any one of the possible implementations of the method design in the first aspect.

According to a sixth aspect, a computer program product is provided. When computer program code or instructions are executed on a computer, the computer is enabled to perform the method according to any one of the possible implementations of the method design in the first aspect.

According to a seventh aspect, a vehicle is provided. The vehicle includes the apparatus in any possible implementation of the second aspect or the third aspect.

## BRIEF DESCRIPTION OF DRAWINGS

FIG. 1 is a functional block diagram of a vehicle 100 according to an embodiment of this application;

FIG. 2 is a diagram of a principle of ranging and speed measurement based on an FMCW radar according to an embodiment of this application;

FIG. 3 is a diagram depicting that a laser outputs a frequency modulated signal according to an embodiment of this application;

FIG. 4 shows a signal processing system 400 according to an embodiment of this application;

FIG. 5 is a schematic flowchart of a signal processing method according to an embodiment of this application;

FIG. 6 is a block diagram of a method for determining a first predistortion signal in time domain according to an embodiment of this application;

FIG. 7 is a block diagram of a method for determining a first predistortion signal in frequency domain according to an embodiment of this application;

FIG. 8 is a diagram of a frequency modulated signal according to an embodiment of this application;

FIG. 9 is a block diagram of a signal processing apparatus 900 according to an embodiment of this application;

FIG. 10 is a block diagram of another signal processing apparatus according to an embodiment of this application; and

FIG. 11 is a block diagram of a computer-readable storage medium according to an embodiment of this application.

## DESCRIPTION OF EMBODIMENTS

The following describes the technical solutions of embodiments in this application with reference to the accompanying drawings.

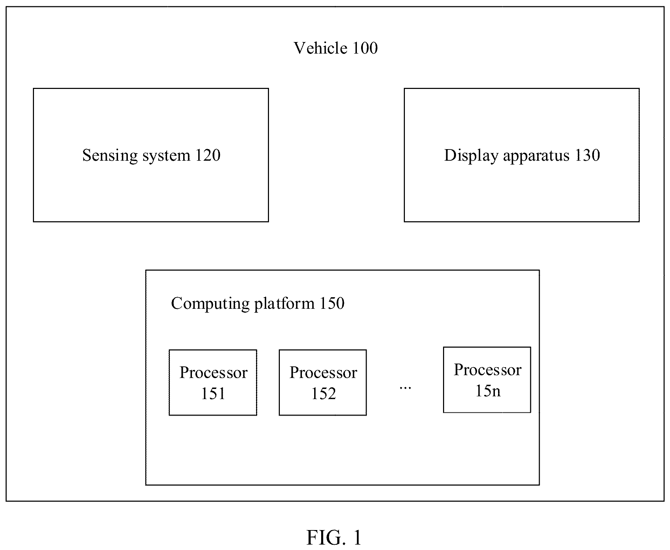

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an ambient environment of the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, or a camera apparatus. The lidar may be an FMCW radar.

Some or all functions of the vehicle 100 may be controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (Field Programmable Gate Array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

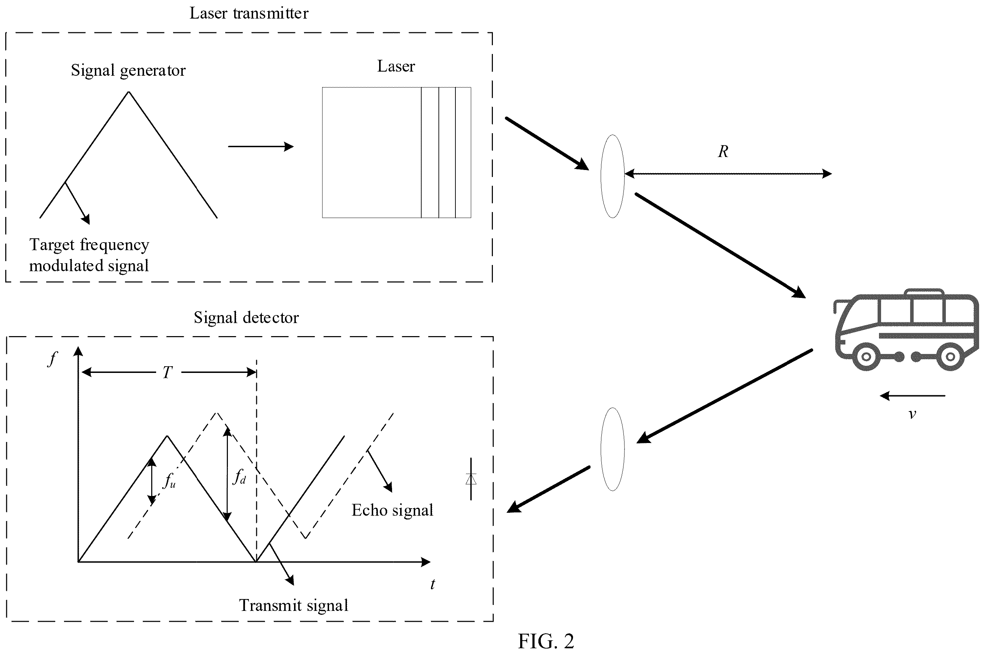

FIG. 2 is a diagram of a principle of ranging and speed measurement based on an FMCW radar according to an embodiment of this application.

The FMCW radar determines information about a group of transmit signals through a signal generator according to a frequency modulation method, and transmits the information about the transmit signal to a laser, so that the laser sends a transmit signal outward through an optical lens module. After the transmit signal touches a target object, the signal is reflected and received by the signal detector in a form of an echo signal.

Based on the foregoing process of receiving and transmitting a laser signal, the transmit signal and the echo signal together form a stable beat frequency signal. Further, a distance (referred to as a target distance below) between the target object and the FMCW and a moving speed (referred to as a target speed) of the target object are solved based on the beat frequency signal. A specific manner is as follows:

First, waveforms of the transmit signal and the echo signal in a coordination system are determined. With reference to FIG. 1, the transmit signal and the echo signal each are a triangle wave.

Then, a frequency modulation period $T$ and a signal bandwidth $B$ of the transmit signal or the echo signal are determined.

Then, a first frequency difference $f_u$ between a waveform rising edge of the transmit signal and a waveform rising edge of the echo signal and a second frequency difference $f_d$ between a waveform falling edge of the transmit signal and a waveform falling edge of the echo signal in a same frequency modulation period are determined.

Finally, a target distance R and a target speed v are respectively determined by using Formula (1) and Formula (2) below:

$$R = \frac{c}{4k}\left(f_u + f_d\right) \tag{1}$$

and

$$v = \frac{c}{4k}\left(f_d - f_u\right) \tag{2},$$

where
c represents a speed of light, $k=B/T_c$, and $T_c=T/2$.

With reference to FIG. 2, it can be learned that the transmit signal and the echo signal each are a very standard triangle wave in waveform, and are in an ideal state. However, in an actual application, due to many non-ideal factors, frequency modulation of a lidar is usually nonlinear.

Frequency modulation of an output signal of a laser includes external modulation and internal modulation, but both of them have nonlinearity of frequency modulation. For example, a drive voltage is used to control a cavity length of a tuned laser, and the cavity length determines a frequency of an output signal. In an ideal case, when the drive voltage used to control the cavity length of the tuned laser changes linearly, a frequency modulated signal output by the laser is also linear. However, due to nonlinearity of frequency modulation, the output frequency modulated signal is nonlinear.

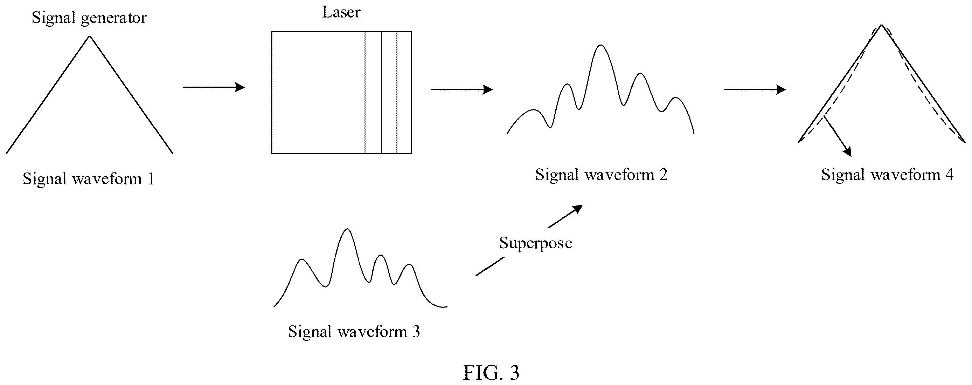

FIG. 3 is a diagram depicting that a laser outputs a frequency modulated signal according to an embodiment of this application.

A signal waveform 1 is a waveform of a target frequency modulated signal input to the laser. Due to nonlinearity of laser frequency modulation, a frequency modulated signal output by the laser is nonlinear, and corresponds to a signal waveform 2. Therefore, the output frequency modulated signal may be corrected, to ensure that a linear frequency modulated signal the same as or similar to the signal waveform 1 is still output by the laser, and corresponds to a signal waveform 4.

At present, the following methods may be mainly used to correct the output frequency modulated signal: a de-slope filtering method, a resampling method, an optical phase lock loop method, and a DPD method.

For the de-slope filtering method, correction precision of a frequency modulated signal is low despite a simple operation. For the resampling method, correction precision of a frequency modulated signal is improved to some extent, but convergence time is long. For optical phase lock loop method, a frequency modulated signal can be quickly and accurately corrected, but implementation of the method needs to be answered, which increases hardware costs and is difficult to be popularized. Compared with the foregoing three frequency modulated signal correction methods, the digital predistortion method has a simple principle, is easy to implement, and can also ensure high correction precision.

With reference to FIG. 3, the DPD method is to obtain, through a signal feedback channel, a feedback frequency modulated signal corresponding to an output frequency modulated signal, where the signal includes a signal feature of the output frequency modulated signal, for example, a frequency modulation period and a signal waveform. Then, an operation of subtraction is directly performed on the feedback frequency modulated signal and the target frequency modulated signal to obtain an error compensation signal, for example, the signal waveform 4 shown in FIG. 3, and then the error compensation signal and the target frequency modulated signal are superposed to generate a predistortion signal. A frequency modulated signal output by the laser based on the predistortion signal is a linear frequency modulated signal or a quasi-linear frequency modulated signal whose signal waveform is the same as or similar to that of the target frequency modulated signal, to reduce a target detection error caused by nonlinearity of frequency modulation.

However, in an application scenario of an existing DPD method, due to a low frequency of laser frequency modulation, feedback frequency modulated signals need to be accumulated in a plurality of frequency modulation periods, and a good linearity correction capability can be obtained only when nonlinearity correction of frequency modulation takes a long enough time. A point output rate of a lidar point cloud requires that a frequency of laser frequency modulation should not be excessively low. A high frequency modulation frequency may increase a non-linear component of laser frequency modulation. Nonlinearity correction requires a long-time iteration to obtain expected performance, which is likely to cause deterioration of maximum performance or even performance divergence. All these results result in the inability to perform real-time correction on nonlinearity of laser frequency modulation. In an intelligent driving scenario, an environment in which a lidar is located is affected by factors such as a temperature, vibration, and interference, and fast convergence of linearity correction of frequency modulation is an important requirement. Therefore, digital predistortion correction of frequency modulation of the laser requires a high frequency modulation frequency, low model complexity, and a fast convergence capability.

Based on a physical model of laser frequency modulation, there is a correlation between correction performance for nonlinearity of frequency modulation and a convergence speed. An objective of embodiments of this application is to develop, based on an approximate laser frequency modulation model, a digital predistortion correction design apparatus for nonlinearity of frequency modulation that meets an actual requirement.

In view of this, embodiments of this application provide a signal processing method and a related apparatus. Signal processing is performed based on a feedback frequency modulated signal in a frequency modulation period corresponding to a current moment, a processed feedback frequency modulated signal is compared with a target frequency modulated signal to determine a predistortion signal, and then the predistortion signal is input to a laser, to achieve a function of correcting a frequency modulated signal in real time.

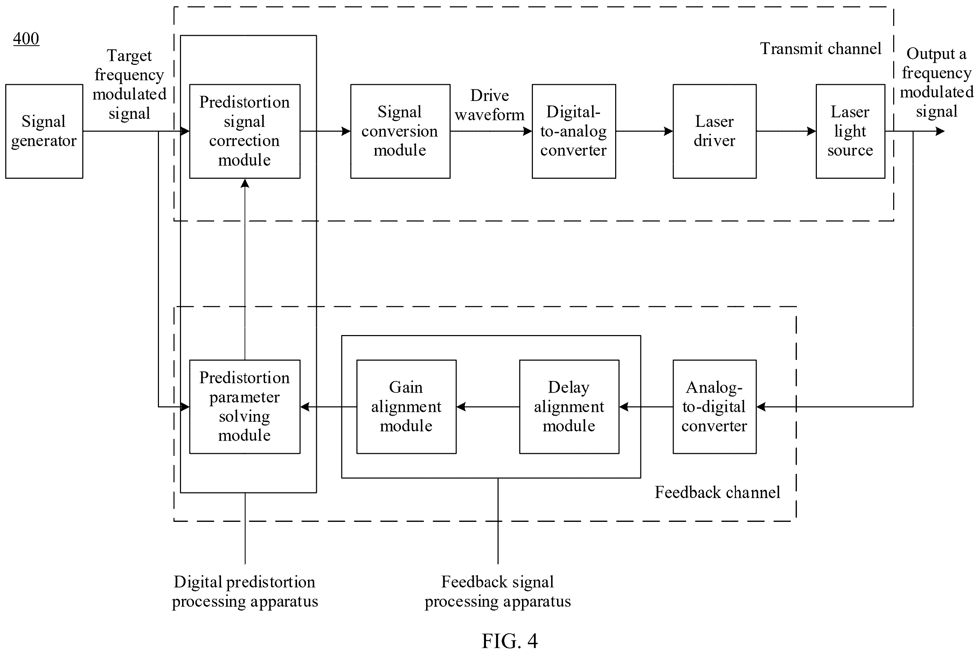

FIG. 4 shows a signal processing system 400 according to an embodiment of this application.

In some possible embodiments, the signal processing system 400 may include a feedback signal processing apparatus and a digital predistortion processing apparatus.

The feedback signal processing apparatus includes a delay alignment module and a gain alignment module. The delay alignment module is configured to ensure that a feedback frequency modulated signal obtained through the feedback signal processing apparatus is aligned with an ideal target frequency modulated signal in time sequence without a delay difference. For the gain alignment module, a gain includes but is not limited to a frequency change value of a frequency modulated signal, or an integral of a frequency of a frequency modulated signal over time. The gain alignment module is configured to ensure that a gain of the feedback frequency modulated signal is equivalent to that of the target frequency modulated signal, to avoid introducing an unnecessary signal gain or attenuation to a predistortion frequency modulated signal when predistortion correction is performed on a nonlinear frequency modulated signal.

The digital predistortion processing apparatus includes a predistortion parameter solving module and a predistortion signal correction module. The predistortion parameter solving module is configured to solve, based on the feedback frequency modulated signal that has undergone delay alignment processing and gain alignment processing, an error parameter by using a corresponding error model. The predistortion signal correction module is configured to determine a predistortion signal based on the error parameter obtained through solving.

In some possible embodiments, composition of the signal processing system 400 is merely an example for description, and does not limit functions and deployment manners corresponding to the apparatuses and the modules. For example, the feedback signal processing apparatus may further include another submodule, configured to replace the predistortion parameter solving module to perform a corresponding conversion operation on the frequency modulated signal, for example, fast Fourier transform (fast Fourier transform, FFT). Alternatively, both the delay alignment module and the gain alignment module may be integrated into one processor, or even the feedback signal processing apparatus and the digital predistortion processing apparatus are integrated into one processing apparatus. This is not limited in embodiments of this application.

In some possible embodiments, the signal processing system 400 may be carried in a lidar system. To be specific, a corresponding function part in the signal processing system 400 is integrated into a transmit channel and a feedback channel in the lidar system.

In some possible embodiments, the transmit channel may include the predistortion signal correction module, a signal conversion module, a digital-to-analog converter, a laser driver, and a laser light source. The feedback channel may include the predistortion parameter solving module, the feedback signal processing apparatus, and the analog-to-digital converter.

A signal generator is configured to: generate a target frequency modulated signal, and transmit the target frequency modulated signal to the predistortion signal correction module.

When an error parameter solving result of the feedback frequency modulated signal already exists in the predistortion signal correction module, the predistortion signal is generated based on the error parameter solving result, and is transmitted to the signal conversion module in the transmit channel. When an error parameter solving result of the feedback frequency modulated signal does not exist in the predistortion signal correction module, the target frequency modulated signal is directly transparently transmitted to the signal conversion module.

The signal conversion module is configured to: generate a drive waveform based on the frequency modulated signal, and transmit the drive waveform to the digital-to-analog converter.

The digital-to-analog converter is configured to: process the drive waveform into an analog signal, and send the analog signal to the laser driver.

The driving laser is configured to generate an output frequency modulated signal based on the analog signal, to drive the laser light source to output the frequency modulated signal.

The analog-to-digital converter is configured to convert, into a digital signal, a collected laser signal generated by the laser, where the digital signal may be used as a feedback signal and may be transmitted to the feedback channel.

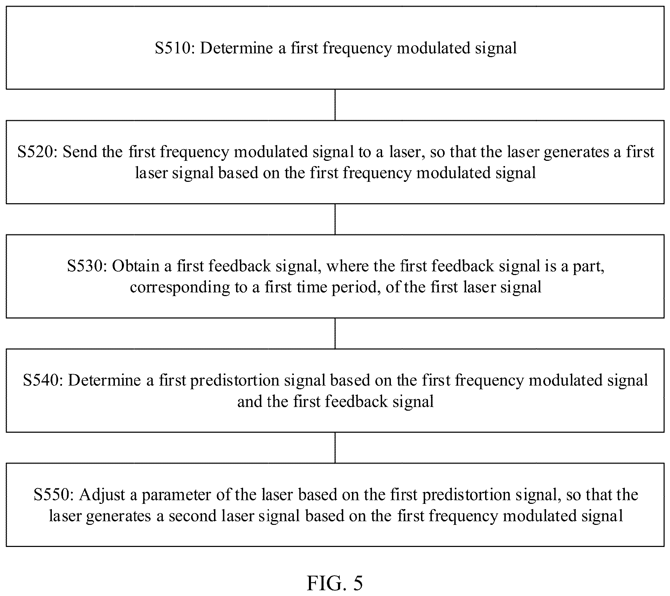

FIG. 5 is a schematic flowchart of a signal processing method according to an embodiment of this application.

S510: Determine a first frequency modulated signal.

In some possible embodiments, the first frequency modulated signal may be the target frequency modulated signal, and the signal may be generated by a signal generator.

In some possible embodiments, the first frequency modulated signal may be a frequency modulated signal with a large frequency modulation period. In this case, according to an existing DPD method, it is difficult to ensure accuracy of determining a predistortion signal based on a frequency modulated signal at a moment or in a short time period.

S520: Send the first frequency modulated signal to a laser, so that the laser generates a first laser signal based on the first frequency modulated signal.

In some possible embodiments, the laser may include the signal conversion module, the digital-to-analog converter, the driving laser, and the laser light source that are in the transmit channel in the signal processing system 400. In other words, for ease of description, the laser mentioned in the signal processing method in this embodiment of this application is a laser that can generate the first laser signal based on the first frequency modulated signal.

In some possible embodiments, the first laser signal may be the output frequency modulated signal in the foregoing embodiment. Due to a nonlinearity characteristic of laser frequency modulation, the first laser signal is a non-linear frequency modulated signal.

S530: Obtain a first feedback signal, where the first feedback signal is a part, corresponding to a first time period, of the first laser signal.

In some possible embodiments, the first time period may also be a time point, namely, a first moment. The first time period may be a current time period or a historical time period, and correspondingly, the first moment may be a current moment or a historical moment. However, a process of correcting the first laser signal based on a predistortion signal determined by solving a parameter based on the first feedback signal in the current time period or the current moment is a quasi-real-time or even real-time process.

S540: Determine a first predistortion signal based on the first frequency modulated signal and the first feedback signal.

In some possible embodiments, signals that are not transmitted by the laser, such as the first frequency modulated signal, the first feedback signal, and the first predistortion signal, are all electrical signals in the signal processing system, and the first laser signal transmitted by the laser is an optical signal.

In some possible embodiments, the first feedback signal is an electrical signal generated by performing analog-to-digital conversion on the first laser signal, and is determined based on the part, corresponding to the first time period, of the first laser signal.

In some possible embodiments, a manner of updating a predistortion signal of the first laser signal includes selection of fast update, slow update, and no update in a specified time period. For example, if an external environment changes sharply, it is required that an update speed of the predistortion signal can keep up with the change, to ensure a correction tracking capability. If an external environment is stable, correspondingly, the predistortion signal is also stable. In this case, slow update or no update in a specified time period may be strategically considered.

S550: Adjust a parameter of the laser based on the first predistortion signal, so that the laser generates a second laser signal based on the first frequency modulated signal.

It should be understood that, through compensation based on the first predistortion signal, consistency can be kept between waveforms of the second laser signal and the first frequency modulated signal.

Based on the foregoing technical solution, the part, corresponding to the first time period or even the first moment, of the first laser signal is used as the first feedback signal, and the first predistortion signal is determined based on the first feedback signal, so that correction compensation can be performed on the first laser signal, enhancing accuracy of lidar-based target detection.

In some possible embodiments, before the first predistortion signal is determined based on the first frequency modulated signal and the first feedback signal, based on the first frequency modulated signal, a delay of the first feedback signal may be aligned with that of the first frequency modulated signal and/or a gain of the first feedback signal may be aligned with that of the first frequency modulated signal.

Based on the foregoing technical solution, the first feedback signal can be aligned with the first frequency modulated signal based on a time-frequency relationship, enhancing signal processing accuracy.

It should be understood that the signal may be represented by a signal function. The same is true in embodiments of this application.

In some possible embodiments, laser frequency modulation behavior may be modeled from a time domain perspective or a frequency domain perspective. A model obtained by molding from a time domain perspective represents a physical model of laser frequency modulation. For example, for a tuned laser based on piezoelectric ceramics (piezoelectric ceramics, PZT), laser frequency modulation may be approximated by using a Bouc-Wen model. A frequency modulated signal of the laser is generated by constructing a model basis function and solving a coefficient of the basis function. Similarly, a frequency domain basis function is constructed based on frequency domain modeling, to approximate the frequency modulated signal. For example, an approximate frequency modulated signal may be generated by using Fourier transform and a multi-order Fourier basis function. Therefore, S530 and S540 may be performed in time domain or frequency domain. A specific process is as follows:

1. Time domain correction

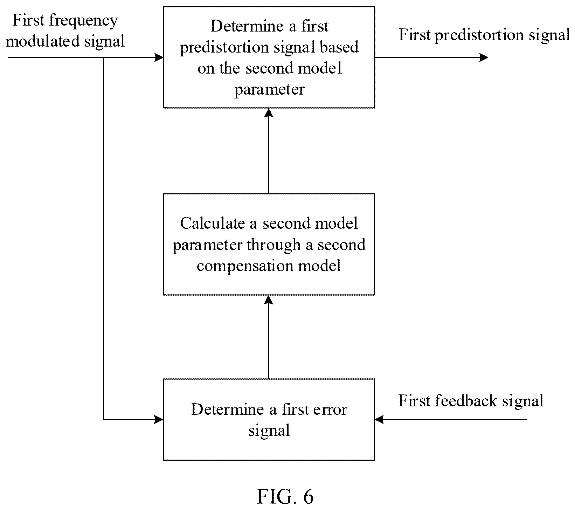

FIG. 6 is a block diagram of a method for determining a first predistortion signal in time domain according to an embodiment of this application.

In some possible embodiments, a first error signal $e^{(n)}(t)$ in time domain may be determined based on the first frequency modulated signal $s_0(t)$ and the first feedback signal $s_{f_b}^{(n)}(t)$. The first error signal may be determined by using Formula (3) below:

$$e^{(n)}(t) = s_0(t) - s_{f_b}^{(n)}(t) \tag{3},$$

where

$s_0(t)$, $s_{f_b}^{(n)}(t)$, and $e^{(n)}(t)$ represent corresponding signal functions, and $(n)$ represents an $n^{th}$ iteration.

In some possible embodiments, the first predistortion signal $s_{dpd}^{(n)}(t)$ may be directly determined by using Formula (4) below:

$$s_{dpd}^{(n)}(t) = s_0(t) + \mu \cdot e^{(n)}(t) \tag{4},$$

where
$\mu$ represents an iteration step, and may be preconfigured based on an actual requirement. Therefore, it may be considered that the parameter is known.

In some possible embodiments, a second model parameter $\left\{ c_{lm}^{(n)} \right\}$ may be further solved based on the following second compensation model. The second compensation model may be determined by using Formula (5) below:

$$\left\| e^{(n)}(t) - \sum_l \sum_m c_{lm}^{(n)} g_l(t - m) \right\| = 0 \tag{5},$$

where
$l$ represents that a current model item is an $l^{th}$ model item, $m$ represents a delay of the current model item, and $g_l(t - m)$ represents a time domain basis function.

Then, the second model parameter $\left\{ c_{lm}^{(n)} \right\}$ may be updated by using a least mean square (least mean square, LMS) algorithm and the following formula (6):

$$c_{lm}^{(n)} = c_{lm}^{(n-1)} + \mu \cdot e^{(n-1)}(t) \cdot \sum_l \sum_m g_l(t - m) \tag{6}.$$

Then, the first predistortion signal is determined based on the second model parameter, and the first predistortion signal may be determined by using Formula (7) below:

$$s_{dpd}^{(n)}(t) = s_0(t) + \sum_l \sum_m c_{lm}^{(n)} g_l(t - m) \tag{7}.$$

2. Frequency domain correction

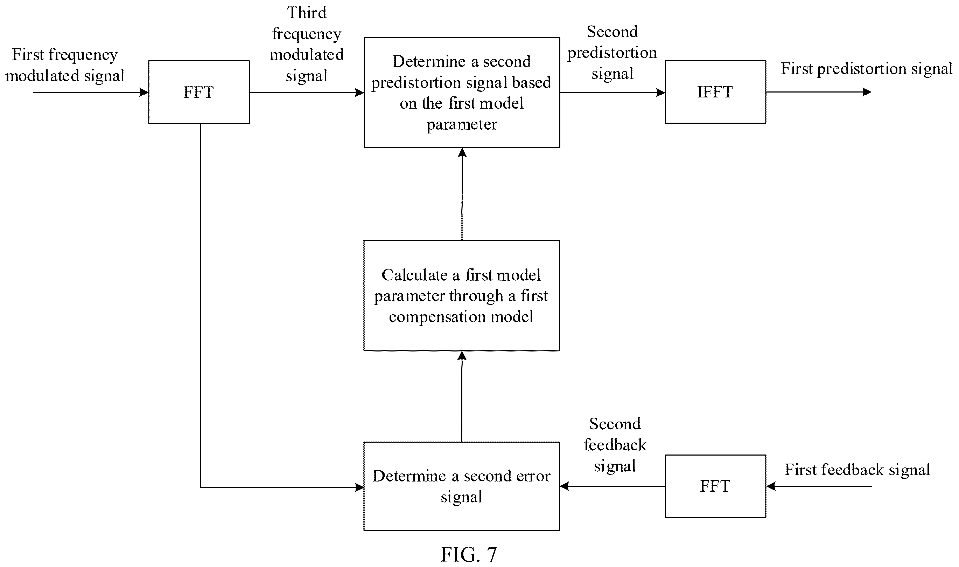

FIG. 7 is a block diagram of a method for determining a first predistortion signal in frequency domain according to an embodiment of this application.

In some possible embodiments, FFT is performed on the first frequency modulated signal $s_0(t)$, to determine a second frequency modulated signal $\hat{s}_0(f)$. Then, FFT is performed on the first feedback signal $s_{f_b}^{(n)}(t)$, to determine a second feedback signal $\hat{s}_{f_b}^{(n)}(f)$. The second frequency modulated signal $\hat{s}_0(f)$ and the second feedback signal $s_{f_b}^{(n)}(t)$ are input to a first compensation model, to determine a first model parameter $\left\{ \hat{c}_l^{(n)} \right\}$, where the first compensation model includes an error signal term and a model parameter term, the error signal term is determined based on a deviation between the second frequency modulated signal $\hat{s}_0(f)$ and the second feedback signal $s_{f_b}^{(n)}(t)$ the model parameter term includes the first model parameter $\left\{ \hat{c}_l^{(n)} \right\}$ and a frequency domain basis function, the first model parameter $\left\{ \hat{c}_l^{(n)} \right\}$ is determined when iteration calculation of the first compensation model meets an iteration termination condition, and the iteration termination condition includes that a vector difference between the error signal term and the model parameter term in vector space is a zero vector. Finally, a second predistortion signal $\hat{s}_{dpd}^{(n)}(f)$ (f) is determined based on the first model parameter $\left\{ \hat{c}_l^{(n)} \right\}$, and IFFT is performed on the second predistortion signal $\hat{s}_{dpd}^{(n)}(f)$, to determine the first predistortion signal $s_{dpd}^{(n)}(t)$.

In some possible embodiments, the first model parameter may be the error parameter provided in the foregoing embodiment.

It should be understood that, according to the foregoing method, it can be learned that an expression of the second frequency modulated signal is $\hat{s}_0(f)=F(s_0(t))$; and an expression of the second feedback signal is $\hat{s}_{f_b}^{(n)}(f) = F(s_{f_b}^{(n)}(t))$. Then, the second predistortion signal $\hat{s}_{dpd}^{(n)}(f)$ is determined based on the second frequency modulated signal $\hat{s}_0(f)$ and the second feedback signal $\hat{s}_{f_b}^{(n)}(f)$; and IFFT is performed on the second predistortion signal $\hat{s}_{dpd}^{(n)}(f)$ to determine an expression of the first predistortion signal: $s_{dpd}^{(n)}(t) = F^{-1}(\hat{s}_{dpd}^{(n)}(f))$.

In some possible embodiments, similar to the first error signal, after the second frequency modulated signal in frequency domain and the second feedback signal in frequency domain are known, a second error signal $\hat{e}^{(n)}(f)$ may be determined by using Formula (8) below:

$$\hat{e}^{(n)}(f) = \hat{s}_0(f) - \hat{s}_{f_b}^{(n)}(f) \qquad (8).$$

It should be understood that the second error signal may be the error signal term included in the first compensation model.

In some possible embodiments, the second predistortion signal $\hat{s}_{dpd}^{(n)}(f)$ may be directly determined by using Formula (9) below:

$$\hat{s}_{dpd}^{(n)}(f) = \hat{s}_0(f) + \mu \cdot \hat{e}^{(n)}(f) \qquad (9).$$

Based on the foregoing descriptions, it can be learned that the first model parameter $\left\{ \hat{c}_l^{(n)} \right\}$ corresponding to the second frequency modulated signal and the second feedback signal can be calculated by using the first compensation model. The first compensation model may be determined by using Formula (10) below:

$$\left\| \hat{e}^{(n)}(f) - \sum_l \hat{c}_l^{(n)} G_l(f) \right\| = 0 \qquad\qquad (10),$$

where

$G_l(f)$ is a frequency domain basis function; and in some possible embodiments, the basis function may be directly selected as a Fourier series $G_l(f) = e^{-i2\pi rlf}$.

In some possible embodiments, the first model parameter $\left\{ \hat{c}_l^{(n)} \right\}$ may be updated by using an LMS algorithm and the following formula (11):

$$\hat{c}_l^{(n)} = \hat{c}_l^{(n-1)} + \mu \cdot \hat{e}^{(n-1)}(f) \cdot \sum_l G_l(f) \qquad\qquad (11),$$

where

$\hat{c}_l^{(n)}$ represents a first model parameter corresponding to an $l^{th}$ model item in an $n^{th}$ iteration, $n \in [1, N]$, N represents a quantity of iterations corresponding to the first model parameter when iterative calculation of the first compensation model meets the iteration termination condition, $\hat{c}_l^{(n-1)}$ represents a first model parameter corresponding to the $l^{th}$ model item in an $(n\text{-}1)^{th}$ iteration, $\mu$ represents an iteration step, $\hat{e}^{(n-1)}(f)$ represents an error of the second feedback signal relative to the second frequency modulated signal in the $(n\text{-}1)^{th}$ iteration, and $Gl(f)$ represents a frequency domain basis function corresponding to the $l^{th}$ model item.

Then, the second predistortion signal is determined based on the first model parameter, and the second predistortion signal may be determined by using Formula (12) below:

$$\hat{s}_{dpd}^{(n)}(f) = \hat{s}_0(f) + \sum_l \hat{c}_l^{(n)} G_l(\hat{s}_0(f)) \qquad\qquad (12),$$

where $\hat{s}_{dpd}^{(n)}(f)$ represents the second predistortion signal obtained after $n$ iterations.

Based on the foregoing technical solution, in a process of signal processing in frequency domain, because the frequency domain is not limited by a time domain constraint, only several orders of signals need to be selected from a frequency domain signal to accurately solve the model parameter, and determine the first predistortion signal, so that quasi-real-time correction compensation for the first laser signal can be implemented. This ensures accuracy of correcting the frequency modulated signal while improving real-time performance of correcting the frequency modulated signal.

It should be understood that a starting point of a time domain correction method and a frequency domain correction method is to construct a basis function of laser frequency modulation, and then update a predistortion signal of laser frequency modulation by updating a coefficient of the basis function, to achieve an objective of correcting nonlinearity of laser frequency modulation. In one aspect, due to diversity of lasers, that is, different types of lasers, time-domain modeling methods are different. Even if the method in the foregoing embodiment is used to determine a universal model in time domain, this process is complex, and high computational power may still be needed to achieve high precision, resulting in limited improvement in real-time performance of correction. In another aspect, to further simplify a process of determining the general model and further improve real-time performance of correction, a digital predistortion process may be switched to a frequency domain, so that frequency modulation nonlinearity correction is modeled. Further, a simple function (for example, a Fourier series) may be used, or a frequency domain model reflecting a frequency modulation capability of the laser may be obtained by band limiting (or more simply by directly intercepting a low order in frequency domain), so that a simplified model is used to reduce computing power. This can implement real-time performance of correction.

In some possible embodiments, the second frequency modulated signal and the second feedback signal may be represented through Fourier series expansion; amplitude and phase compensation parameters corresponding to the second frequency modulated signal and the second feedback signal are determined based on the second frequency modulated signal and the second feedback signal that are represented through Fourier series expansion, where the amplitude and phase compensation parameters belong to the first model parameter; and the second predistortion signal is determined based on the amplitude and phase compensation parameters. In view of this, a process of solving the first model parameter may be as follows:

The second frequency modulated signal may be expanded into the following form:

$$s_0 = \sum_{k=1,2,\dots}^{N} -\frac{8}{\pi^2} \cdot A_k^{(0)} \cdot \cos(k \cdot 2\pi f_0 A_1^{(0)} \cdot t + P_k^{(0)}),$$

where

N is a positive integer, $A_k^{(0)}$ represents an amplitude of the second frequency modulated signal in the 0th iteration of a $k^{th}$ model item, $f_0$ represents a frequency of the second frequency modulated signal, and $P_k^{(0)}$ represents a phase shift value of the second frequency modulated signal in the 0th iteration of the $k^{th}$ model item.

In some possible embodiments, k may also be 1, 3, 5, ..., N. This is not limited in embodiments of this application.

Similarly, the second feedback signal may be expanded into the following form:

$$s_{fb}^{(n)} = \sum_{k=1,2,\dots}^{N} -\frac{8}{\pi^2} \cdot a_k^{(0)} \cdot \cos(k \cdot 2\pi f_0 a_1^{(0)} \cdot t + p_k^{(0)}),$$

where

$a_k^{(0)}$ represents an amplitude of the second feedback signal in the 0th iteration of a $k^{th}$ model item, and $p_k^{(0)}$ represents a phase shift value of the second feedback signal of in the 0th iteration of the $k^{th}$ model item.

Amplitude and phase compensation parameters corresponding to the second feedback signal are determined based on the second frequency modulated signal and the second feedback signal that are represented through Fourier series expansion, where the amplitude and phase compensation parameters belong to the first model parameter. The amplitude and phase compensation parameters may be determined by using Formula (13) below:

$$\begin{cases} ca_k^{(n)} = \dfrac{A_k^{(0)}}{a_k^{(n)}} \\ cp_k^{(n)} = P_k^{(0)} - p_k^{(n)} \end{cases} \tag{13},$$

where

$ca_k^{(n)}$ is an amplitude compensation parameter determined after a $k^{th}$ model item undergoes an nth iteration, and

$cp_k^{(n)}$ is a phase shift compensation parameter determined after the $k^{th}$ model item undergoes the nth iteration.

Based on the foregoing solving formula for the amplitude and phase compensation parameters, an expression of the amplitude and phase compensation parameters can be determined, and the expression may be represented by the following formula (14):

$$\begin{cases} A_k^{(n)} = A_k^{(n-1)} \cdot ca_k^{(n)} \\ P_k^{(n)} = P_k^{(n-1)} + cp_k^{(n)} \end{cases} \tag{14}.$$

Based on the foregoing amplitude and phase compensation parameters, a signal model expression corresponding to the second predistortion signal can be determined, and the signal model expression may be represented by the following formula (15):

$$s_{dpb}^{(n)} = \sum_{k=1,2,\dots}^{N} -\frac{8}{\pi^2} \cdot A_k^{(n)} \cdot \cos(k \cdot 2\pi f_0 A_1^{(0)} \cdot t + P_k^{(n)}) \tag{15}.$$

Based on the foregoing technical solution, the signal model expression of the second predistortion signal can be further determined through Fourier series expansion. Therefore, after each model parameter in the signal model expression is obtained in real time, the second predistortion signal can be determined in real time based on the signal model expression. This reduces complexity of solving the first model parameter and determining the second predistortion signal, and further improves real-time performance of correcting the frequency modulated signal.

In some possible embodiments, the second frequency modulated signal and the second feedback signal that are in a low-order bandwidth are intercepted before the second frequency modulated signal and the second feedback signal are input into the first compensation model.

In some possible embodiments, because an inflection point or an odd point, also referred to as a corner point, of the frequency modulated signal of the laser is a high-frequency component of the frequency modulated signal, calculation processing on this part of signal needs to consume a large quantity of computing resources, but only a few accuracy gains can be obtained. Therefore, an ROI signal in time domain may be selected, and some frequency modulated signals at a corner of laser frequency modulation (for example, upper and lower chirp inflection points) are ignored. In addition, resonance exists in a response of laser tuning to the high-frequency part, but a low-frequency component is a main cause of nonlinear distortion. Therefore, band-limited processing may be performed on a frequency in frequency domain, including but not limited to direct truncation or passing through a filter, to reduce computing resources, control an accumulated error introduced by high-frequency calculation, and reduce a performance loss.

In the time domain correction method, band-limited processing may be performed on a time domain basis function $g_i(t)$, to intercept the first frequency modulated signal in a low-order bandwidth. The first frequency modulated signal on which band-limited processing is performed is represented as follows: $T_i[s_0(t)]=g_i(t)\cdot\omega(t)$, where $\omega(t)$ is a band-limited function, for example, a band-pass filtering function. A processing manner of the first feedback signal is similar.

In the frequency domain correction method, band-limited processing may be performed on the frequency domain basis function $G_i(f)$, to intercept the first frequency modulated signal in the low-order bandwidth. The second frequency modulated signal that corresponds to the first frequency modulated signal and on which band-limited processing is performed is represented as follows: $T_i[s_0(f)]=G_i(f)\cdot\hat{\omega}(f)$, where $\hat{\omega}(t)$ is a band-limited function, for example, a truncated function. A processing manner of the second feedback signal corresponding to the first feedback signal is similar.

Based on the foregoing technical solution, the first frequency modulated signal and the first feedback signal that are in a lower order bandwidth are intercepted to determine the first predistortion signal, so that a model order can be reduced, and computational power overheads can be reduced. In one aspect, due to factors such as resonance in a high frequency of laser frequency modulation, a frequency modulation response is inaccurate, and high frequency correction may cause performance deterioration. In another aspect, a high-frequency part is not a main factor that affects linearity performance of laser frequency modulation. Therefore, band-limited processing in frequency domain can improve correction accuracy and reduce model calculation complexity.

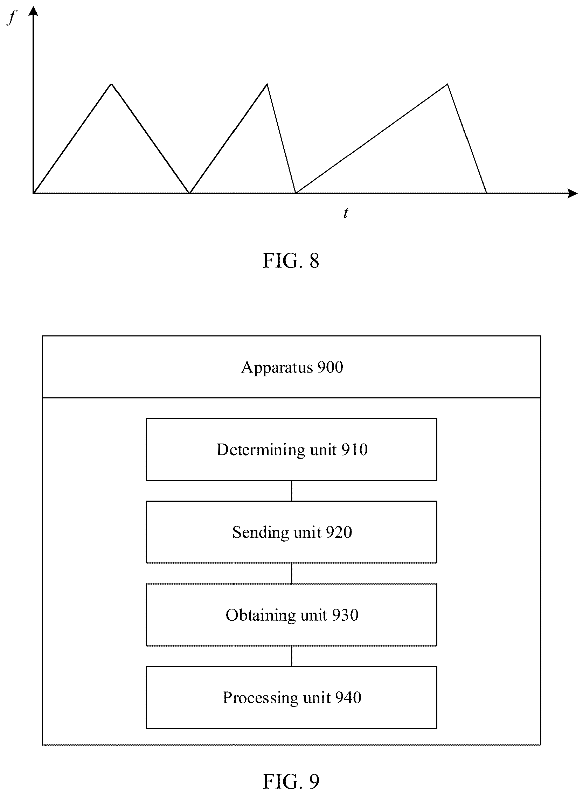

FIG. 8 is a diagram of a frequency modulated signal according to an embodiment of this application.

With reference to FIG. 8, in an actual application, a signal parameter such as a refrequency or a chirp rate of a frequency modulated signal may change. In this case, it cannot be ensured that waveforms of the frequency modulated signal in all frequency modulation periods are completely consistent.

It should be understood that the signal model expression provided in the foregoing embodiment is generally applicable. Therefore, the expression may be applied to frequency modulation correction of a variable chirp signal, that is, changing an input target frequency modulated signal. A model of laser frequency modulation does not change with target frequency modulation, but only a coefficient of the model changes. That is, the chirp may be a triangle wave, or may be another set waveform. When the chirp changes due to an actual requirement, a DPD waveform is updated with a solving iteration.

In addition, an embodiment of this application further provides an apparatus configured to implement any one of the foregoing methods. For example, a braking apparatus is provided. The apparatus includes a unit (or a means) configured to implement any one of the foregoing braking methods.

FIG. 9 is a block diagram of a signal processing apparatus 900 according to an embodiment of this application. As shown in FIG. 9, the apparatus 900 includes:

a determining unit 910, configured to determine a first frequency modulated signal;
a sending unit 920, configured to send the first frequency modulated signal to a laser, so that the laser generates a first laser signal based on the first frequency modulated signal;
an obtaining unit 930, configured to obtain a first feedback signal, where the first feedback signal is a part, corresponding to a first time period, of the first laser signal; and
a processing unit 940, configured to determine a first predistortion signal based on the first frequency modulated signal and the first feedback signal; and adjust a parameter of the laser based on the first predistortion signal, so that the laser generates a second laser signal based on the first frequency modulated signal.

In some possible embodiments, the processing unit 940 is further configured to: adjust the first feedback signal by using the first frequency modulated signal as a reference, so that a delay of the first feedback signal is aligned with that of the first frequency modulated signal and/or a gain of the first feedback signal is aligned with that of the first frequency modulated signal.

In some possible embodiments, the processing unit 940 is specifically configured to: perform fast Fourier transform FFT on the first frequency modulated signal, to determine a second frequency modulated signal; perform FFT on the first feedback signal, to determine a second feedback signal; input the second frequency modulated signal and the second feedback signal to a first compensation model, to determine a first model parameter, where the first compensation model includes an error signal term and a model parameter term, the error signal term is determined based on a deviation between the second frequency modulated signal and the second feedback signal, the model parameter term includes the first model parameter and a frequency domain basis function, the first model parameter is determined when iteration calculation of the first compensation model meets an iteration termination condition, and the iteration termination condition includes that a vector difference between the error signal term and the model parameter term in vector space is a zero vector; determine a second predistortion signal based on the first model parameter; and perform inverse fast Fourier transform IFFT on the second predistortion signal, to determine the first predistortion signal.

In some possible embodiments, the first model parameter may be expressed by Formula (16) below:

$$\hat{c}_l^{(n)} = \hat{c}_l^{(n-1)} + \mu \cdot \hat{e}^{(n-1)}(f) \cdot \sum_l G_l(f) \qquad (16),$$

where

$\hat{c}_l^{(n)}$ represents a first model parameter corresponding to an $l^{th}$ model item in an $n^{th}$ iteration, $n \in [1, N]$, N represents a quantity of iterations corresponding to the first model parameter when iterative calculation of the first compensation model meets the iteration termination condition, $\hat{c}_l^{(n-1)}$ represents a first model parameter corresponding to the $l^{th}$ model item in an $(n-1)^{th}$ iteration, $\mu$ represents an iteration step, $\hat{e}^{(n-1)}(f)$ represents an error of the second feedback signal relative to the second frequency modulated signal in the $(n-1)^{th}$ iteration, and $G_l(f)$ represents a frequency domain basis function corresponding to the $l^{th}$ model item.

In some possible embodiments, the second predistortion signal may be expressed by Formula (17) below:

$$\hat{s}_{dpd}^{(n)}(f) = \hat{s}_0(f) + \sum_l \hat{c}_l^{(n)} G_l(f) \qquad (17),$$

where

$\hat{s}_{dpd}^{(n)}(f)$ represents the second predistortion signal obtained through $n$ iterations, and $\hat{s}_0(f)$ represents the second frequency modulated signal.

In some possible embodiments, the processing unit 940 is further configured to: represent the second frequency modulated signal and the second feedback signal through Fourier series expansion; determine, based on the second frequency modulated signal and the second feedback signal that are represented through Fourier series expansion, amplitude and phase compensation parameters corresponding to the second frequency modulated signal and the second feedback signal, where the amplitude and phase compensation parameters belong to the first model parameter; and determine the second predistortion signal based on the amplitude and phase compensation parameters.

In some possible embodiments, the processing unit 940 is further configured to: represent the second frequency modulated signal and the second feedback signal through Fourier series expansion; and determine, based on the second frequency modulated signal and the second feedback signal that are represented through Fourier series expansion, amplitude and phase compensation parameters corresponding to the second feedback signal, where the amplitude and phase compensation parameters belong to the first model parameter.

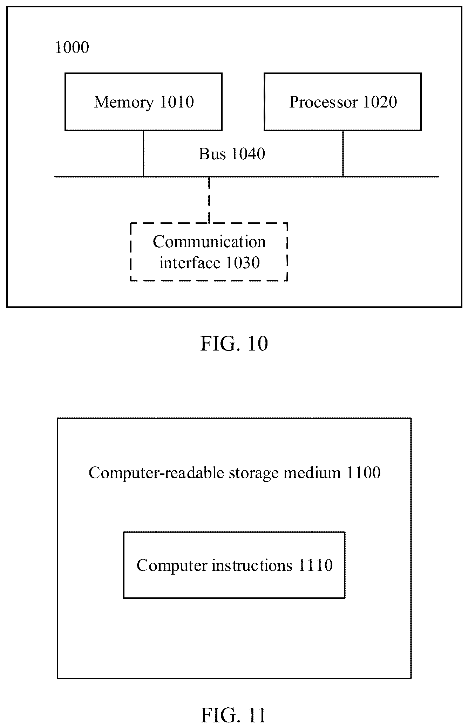

FIG. 10 is a block diagram of another signal processing apparatus according to an embodiment of this application. The signal processing apparatus 1000 shown in FIG. 10 includes a memory 1010, a processor 1020, and a bus 1040. Optionally, the computer device 1000 further includes a communication interface 1030. The memory 1010, the processor 1020, and the communication interface 1030 implement mutual communication connections through the bus 1040.

The memory 1010 may be a read-only memory (read-only memory, ROM), a static storage device, a dynamic storage device, or a random access memory (random access memory, RAM). The memory 1010 may store a program. When the program stored in the memory 1010 is executed by the processor 1020, the processor 1020 is configured to perform steps of a neural network model training method in embodiments of this application. Specifically, the processor 1020 may perform the method shown in FIG. 5.

The processor 1020 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the signal processing method provided in embodiments of this application.

The processor 1020 may alternatively be an integrated circuit chip, and has a signal processing capability. In an implementation process, the steps of the signal processing method provided in embodiments in this application may be completed by using an integrated logic circuit of hardware in the processor 1020 or instructions in a software form.

The processor 1020 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 910. The processor 920 reads information in the memory 1010, and completes, in combination with hardware of the processor, functions that need to be performed by units included in the apparatus shown in FIG. 9, or performs the method shown in FIG. 5 in the method embodiment of this application.

The communication interface 1030 uses a transceiver apparatus, for example but not for limitation, a transceiver, to implement communication between the apparatus 1000 and another device or a communication network. For example, iterative calculation data may be obtained through the communication interface 1030.

The bus 1040 may include a path for transmitting information between the components (for example, the memory 1010, the processor 1020, and the communication interface 1030) of the apparatus 1000.

It should be understood that, although only the memory, the processor, and the communication interface are shown in the foregoing apparatus 1000, in a specific implementation process, a person skilled in the art should understand that the apparatus 1000 may further include another component that is necessary to implement normal running. In addition, based on a specific requirement, a person skilled in the art should understand that the apparatus 1000 may further include hardware components for implementing other additional functions. In addition, a person skilled in the art should understand that the apparatus 1000 may alternatively include only a component required for implementing embodiments of this application, and does not need to include all components shown in FIG. 10.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

FIG. 11 is a block diagram of a computer-readable storage medium according to an embodiment of this application. The computer-readable storage medium 1100 shown in FIG. 11 stores computer instructions 1110. When the computer instructions 1110 are executed by a processor, the method 500 shown in FIG. 5 may be implemented.

In some possible embodiments, the computer-readable storage medium 1100 may be any usable medium accessible by a computer, or a data storage device, for example, a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in the computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal processing method, wherein the method comprises:

    determining a first frequency modulated signal;
    sending the first frequency modulated signal to a laser, so that the laser generates a first laser signal based on the first frequency modulated signal;
    obtaining a first feedback signal, wherein the first feedback signal is a part, corresponding to a first time period, of the first laser signal;
    determining a first predistortion signal based on the first frequency modulated signal and the first feedback signal; and
    adjusting a parameter of the laser based on the first predistortion signal, so that the laser generates a second laser signal based on the first frequency modulated signal.

2. The method according to claim 1, wherein before determining the first predistortion signal based on the first frequency modulated signal and the first feedback signal, the method further comprises:
   adjusting the first feedback signal by using the first frequency modulated signal as a reference, so that a delay of the first feedback signal is aligned with that of the first frequency modulated signal and/or a gain of the first feedback signal is aligned with that of the first frequency modulated signal.

3. The method according to claim 1 or 2, wherein determining the first predistortion signal based on the first frequency modulated signal and the first feedback signal comprises:

    performing fast Fourier transform FFT on the first frequency modulated signal, to determine a second frequency modulated signal;
    performing FFT on the first feedback signal, to determine a second feedback signal;
    inputting the second frequency modulated signal and the second feedback signal to a first compensation model, to determine a first model parameter, wherein the first compensation model comprises an error signal term and a model parameter term, the error signal term is determined based on a deviation between the second frequency modulated signal and the second feedback signal, the model parameter term comprises the first model parameter and a frequency domain basis function, the first model parameter is determined when iteration calculation of the first compensation model meets an iteration termination condition, and the iteration termination condition comprises that a vector difference between the error signal term and the model parameter term in vector space is a zero vector;

determining a second predistortion signal based on the first model parameter; and

performing inverse fast Fourier transform IFFT on the second predistortion signal, to determine the first predistortion signal.

4.  The method according to claim 3, wherein the first model parameter is expressed by Formula (1) below:

$$\hat{c}_l^{(n)}=\hat{c}_l^{(n-1)} + \mu \cdot \hat{e}^{(n-1)}(f) \cdot \sum_l G_l(f) \qquad (1),$$

wherein

$\hat{c}_l^{(n)}$ represents the first model parameter corresponding to an $l^{th}$ model item in an $n^{th}$ iteration, $n \in [1, N]$, N represents a quantity of iterations corresponding to the first model parameter when iterative calculation of the first compensation model meets the iteration termination condition, $\hat{c}_l^{(n-1)}$ represents the first model parameter corresponding to the $l^{th}$ model item in an $(n-1)^{th}$ iteration, $\mu$ represents an iteration step, $\hat{e}^{(n-1)}(f)$ represents an error of the second feedback signal relative to the second frequency modulated signal in the $(n-1)^{th}$ iteration, and $G_l(f)$ represents a frequency domain basis function corresponding to the $l^{th}$ model item.

5.  The method according to claim 3 or 4, wherein the second predistortion signal is expressed by Formula (2) below:

$$\hat{s}_{dpd}^{(n)}(f) = \hat{s}_0(f) + \sum_l \hat{c}_l^{(n)} G_l(\hat{s}_0(f)) \qquad (2),$$

wherein

$\hat{s}_{dpd}^{(n)}(f)$ represents the second predistortion signal obtained through $n$ iterations, $\hat{c}_l^{(n)}$ represents the first model parameter corresponding to the $l^{th}$ model item in the $n^{th}$ iteration, $n \in [1, N]$, N represents the quantity of iterations corresponding to the first model parameter when iterative calculation of the first compensation model meets the iteration termination condition, and $\hat{s}_0(f)$ represents the second frequency modulated signal.

6.  The method according to any one of claims 3 to 5, wherein the method further comprises:

representing the second frequency modulated signal and the second feedback signal through Fourier series expansion;

determining, based on the second frequency modulated signal and the second feedback signal that are represented through Fourier series expansion, amplitude and phase compensation parameters corresponding to the second frequency modulated signal and the second feedback signal, wherein the amplitude and phase compensation parameters belong to the first model parameter; and

determining the second predistortion signal based on the amplitude and phase compensation parameters.

7.  The method according to any one of claims 3 to 6, wherein before inputting the second frequency modulated signal and the second feedback signal to the first compensation model, the method further comprises:

intercepting the second frequency modulated signal and the second feedback signal that are in a low-order bandwidth.

8.  A signal processing apparatus, wherein the apparatus comprises:

a determining unit, configured to determine a first frequency modulated signal;

a sending unit, configured to send the first frequency modulated signal to a laser, so that the laser generates a first laser signal based on the first frequency modulated signal;

an obtaining unit, configured to obtain a first feedback signal, wherein the first feedback signal is a part, corresponding to a first time period, of the first laser signal; and

a processing unit, configured to determine a first predistortion signal based on the first frequency modulated signal and the first feedback signal; and adjust a parameter of the laser based on the first predistortion signal, so that the laser generates a second laser signal based on the first frequency modulated signal.

9. The apparatus according to claim 8, wherein the processing unit is further configured to:
adjust the first feedback signal by using the first frequency modulated signal as a reference, so that a delay of the first feedback signal is aligned with that of the first frequency modulated signal and/or a gain of the first feedback signal is aligned with that of the first frequency modulated signal.

10. The apparatus according to claim 8 or 9, wherein the processing unit is specifically configured to:

perform fast Fourier transform FFT on the first frequency modulated signal, to determine a second frequency modulated signal;
perform FFT on the first feedback signal, to determine a second feedback signal;
input the second frequency modulated signal and the second feedback signal to a first compensation model, to determine a first model parameter, wherein the first compensation model comprises an error signal term and a model parameter term, the error signal term is determined based on a deviation between the second frequency modulated signal and the second feedback signal, the model parameter term comprises the first model parameter and a frequency domain basis function, the first model parameter is determined when iteration calculation of the first compensation model meets an iteration termination condition, and the iteration termination condition comprises that a vector difference between the error signal term and the model parameter term in vector space is a zero vector;
determine a second predistortion signal based on the first model parameter; and
perform inverse fast Fourier transform IFFT on the second predistortion signal, to determine the first predistortion signal.

11. The apparatus according to claim 10, wherein the first model parameter is expressed by Formula (1) below:

$$\hat{c}_l^{(n)} = \hat{c}_l^{(n-1)} + \mu \cdot \hat{e}^{(n-1)}(f) \cdot \sum_l G_l(f) \qquad (1),$$

wherein

$\hat{c}_l^{(n)}$ represents the first model parameter corresponding to an $l^{th}$ model item in an $n^{th}$ iteration, $n \in [1, N]$, N represents a quantity of iterations corresponding to the first model parameter when iterative calculation of the first compensation model meets the iteration termination condition, $\hat{c}_l^{(n-1)}$ represents the first model parameter corresponding to the $l^{th}$ model item in an $(n-1)^{th}$ iteration, $\mu$ represents an iteration step, $\hat{e}^{(n-1)}(f)$ represents an error of the second feedback signal relative to the second frequency modulated signal in the $(n-1)^{th}$ iteration, and $G_l(f)$ represents a frequency domain basis function corresponding to the $l^{th}$ model item.

12. The apparatus according to claim 10 or 11, wherein the second predistortion signal is expressed by Formula (2) below:

$$\hat{s}_{dpd}^{(n)}(f) = \hat{s}_0(f) + \sum_l \hat{c}_l^{(n)} G_l(\hat{s}_0(f)) \qquad (2),$$

wherein

$\hat{s}_{dpd}^{(n)}(f)$ represents the second predistortion signal obtained through $n$ iterations, $\hat{c}_l^{(n)}$ represents the first model parameter corresponding to the $l^{th}$ model item in the $n^{th}$ iteration, $n \in [1, N]$, N represents the quantity of iterations corresponding to the first model parameter when iterative calculation of the first compensation model meets the iteration termination condition, and $\hat{s}_0(f)$ represents the second frequency modulated signal.

13. The apparatus according to any one of claims 10 to 12, wherein the processing unit is further configured to:

represent the second frequency modulated signal and the second feedback signal through Fourier series expansion;
determine, based on the second frequency modulated signal and the second feedback signal that are represented through Fourier series expansion, amplitude and phase compensation parameters corresponding to the second frequency modulated signal and the second feedback signal, wherein the amplitude and phase compensation parameters belong to the first model parameter; and
determine the second predistortion signal based on the amplitude and phase compensation parameters.

14. The apparatus according to any one of claims 10 to 13, wherein the processing unit is further configured to: intercept the second frequency modulated signal and the second feedback signal that are in a low-order bandwidth.

15. A signal processing apparatus, wherein the apparatus comprises:

a memory, configured to store computer instructions; and
a processor, configured to execute the computer instructions stored in the memory, to enable the apparatus to perform the method according to any one of claims 1 to 7.

16. A chip system, wherein the chip system is used in an electronic device; the chip system comprises one or more interface circuits and one or more processors; the interface circuit and the processor are interconnected through a line; the interface circuit is configured to: receive a signal from a memory of the electronic device and send the signal to the processor, wherein the signal comprises computer instructions stored in the memory; and when the processor executes the computer instructions, the electronic device performs the method according to any one of claims 1 to 7.

17. A computer storage medium, wherein the computer storage medium stores computer instructions, and when the instructions are executed on a computer, the computer is enabled to perform the method according to any one of claims 1 to 7.

18. A computer program product, wherein when the computer program code or instructions are executed on a computer, the computer is enabled to perform the method according to any one of claims 1 to 7.

19. A vehicle, comprising the apparatus according to any one of claims 8 to 15.

Vehicle 100

Sensing system 120

Display apparatus 130

Computing platform 150

| Processor 151 | Processor 152 | ... | Processor 15n |

FIG. 1

FIG. 2

Signal generator

Laser

Signal waveform 1

Signal waveform 2

Signal waveform 4

Superpose

Signal waveform 3

FIG. 3

FIG. 4

S510: Determine a first frequency modulated signal

S520: Send the first frequency modulated signal to a laser, so that the laser generates a first laser signal based on the first frequency modulated signal

S530: Obtain a first feedback signal, where the first feedback signal is a part, corresponding to a first time period, of the first laser signal

S540: Determine a first predistortion signal based on the first frequency modulated signal and the first feedback signal

S550: Adjust a parameter of the laser based on the first predistortion signal, so that the laser generates a second laser signal based on the first frequency modulated signal

FIG. 5

First frequency
modulated signal

Determine a first
predistortion signal based
on the second model
parameter

First predistortion signal

Calculate a second model
parameter through a second
compensation model

Determine a first error
signal

First feedback signal

FIG. 6

FIG. 7

First frequency modulated signal → FFT → Third frequency modulated signal → Determine a second predistortion signal based on the first model parameter → Second predistortion signal → IFFT → First predistortion signal

Calculate a first model parameter through a first compensation model

Determine a second error signal

First feedback signal → FFT → Second feedback signal → Determine a second error signal

FIG. 8

Apparatus 900

Determining unit 910

Sending unit 920

Obtaining unit 930

Processing unit 940

FIG. 9

1000

Memory 1010

Processor 1020

Bus 1040

Communication
interface 1030

FIG. 10

Computer-readable storage medium 1100

Computer instructions 1110

FIG. 11

## INTERNATIONAL SEARCH REPORT

| International application No. |
|---|
| **PCT/CN2024/070790** |

### A. CLASSIFICATION OF SUBJECT MATTER

G01S7/497(2006.01)i

According to International Patent Classification (IPC) or to both national classification and IPC

### B. FIELDS SEARCHED

Minimum documentation searched (classification system followed by classification symbols)

G01S7/-; G01S17/-

Documentation searched other than minimum documentation to the extent that such documents are included in the fields searched

Electronic data base consulted during the international search (name of data base and, where practicable, search terms used)

CNTXT, ENTXTC, OETXT, VEN, CNKI, IEEE, 百度学术, BAIDU SCHOLAR: 华为技术有限公司; 石现领, 谢环, 巫红英; 测距, 调频, 调制, 非线性, 傅里叶, 傅利叶, 傅立叶, 基函数, 激光, 建模, 模型, 逆傅里叶, 逆傅利叶, 频域, 系数, 预失真; coefficient, DPD, FFT, FMCW, fourier, frequency, IFFT, LASER, non, pre, spectrum, sweep, feedback+, correct+, linear+, compensat+, distort+, basis function, calibrat+, model.

### C. DOCUMENTS CONSIDERED TO BE RELEVANT

| Category* | Citation of document, with indication, where appropriate, of the relevant passages | Relevant to claim No. |
|---|---|---|
| Y | ZHANG, XiaoSheng et al. "Laser Frequency Sweep Linearization by Iterative Learning Pre-Distortion for FMCW LiDAR" *Optics Express*, 01 April 2019 (2019-04-01), page 2, and figure 1 | 1-19 |
| Y | R. N. Braithwaite. "Digital Predistortion of an RF Power Amplifier Using a Reduced Volterra Series Model With a Memory Polynomial Estimator" *IEEE Transactions on Microwave Theory and Techniques*, 31 October 2017 (2017-10-31), page 3614, left column, last paragraph, page 3616, section B, and figure 1 | 1-19 |
| A | US 2013329833 A1 (BAI, CHUNLONG et al.) 12 December 2013 (2013-12-12) entire document | 1-19 |
| A | US 2004212428 A1 (FUJITSU LTD.) 28 October 2004 (2004-10-28) entire document | 1-19 |

☑ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 February 2024** | **27 February 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/070790** |

### C. DOCUMENTS CONSIDERED TO BE RELEVANT

| Category* | Citation of document, with indication, where appropriate, of the relevant passages | Relevant to claim No. |
|---|---|---|
| A | WO 2021184206 A1 (SUTENG INNOVATION TECHNOLOGY CO., LTD.) 23 September 2021 (2021-09-23)<br>entire document | 1-19 |
| A | CN 111025268 A (BEIJING AEROSPACE INSTITUTE FOR METROLOGY AND MEASUREMENT TECHNOLOGY et al.) 17 April 2020 (2020-04-17)<br>entire document | 1-19 |
| A | US 11268997 B1 (KEYSIGHT TECHNOLOGIES INC.) 08 March 2022 (2022-03-08)<br>entire document | 1-19 |
| A | WO 2016000169 A1 (HUAWEI TECHNOLOGIES CO., LTD.) 07 January 2016 (2016-01-07)<br>entire document | 1-19 |
| A | CN 101036068 A (LEICA GEOSYSTEMS AG.) 12 September 2007 (2007-09-12)<br>entire document | 1-19 |
| A | US 2023014034 A1 (VOYANT PHOTONICS INC.) 19 January 2023 (2023-01-19)<br>entire document | 1-19 |
| A | CN 105453421 A (HUAWEI TECHNOLOGIES CO., LTD.) 30 March 2016 (2016-03-30)<br>entire document | 1-19 |
| A | CN 112639528 A (HUAWEI TECHNOLOGIES CO., LTD.) 09 April 2021 (2021-04-09)<br>entire document | 1-19 |

Form PCT/ISA/210 (second sheet) (July 2022)

**INTERNATIONAL SEARCH REPORT**
Information on patent family members

International application No.

**PCT/CN2024/070790**

| Patent document cited in search report | | | Publication date (day/month/year) | Patent family member(s) | | | Publication date (day/month/year) |
|---|---|---|---|---|---|---|---|
| US | 2013329833 | A1 | 12 December 2013 | EP | 2859655 | A2 | 15 April 2015 |
| | | | | EP | 2859655 | B1 | 28 September 2016 |
| | | | | US | 8787494 | B2 | 22 July 2014 |
| | | | | WO | 2013186710 | A2 | 19 December 2013 |
| | | | | WO | 2013186710 | A3 | 13 March 2014 |
| US | 2004212428 | A1 | 28 October 2004 | WO | 02087097 | A1 | 31 October 2002 |
| | | | | JPWO | 2002087097 | A1 | 12 August 2004 |
| | | | | JP | 3857652 | B2 | 13 December 2006 |
| | | | | US | 6864745 | B2 | 08 March 2005 |
| WO | 2021184206 | A1 | 23 September 2021 | | None | | |
| CN | 111025268 | A | 17 April 2020 | | None | | |
| US | 11268997 | B1 | 08 March 2022 | | None | | |
| WO | 2016000169 | A1 | 07 January 2016 | | None | | |
| CN | 101036068 | A | 12 September 2007 | CA | 2583337 | A1 | 20 April 2006 |
| | | | | CA | 2583337 | C | 08 July 2014 |
| | | | | WO | 2006040263 | A1 | 20 April 2006 |
| | | | | JP | 2008516213 | A | 15 May 2008 |
| | | | | JP | 4980916 | B2 | 18 July 2012 |
| | | | | EP | 1645890 | A1 | 12 April 2006 |
| | | | | US | 2009135403 | A1 | 28 May 2009 |
| | | | | US | 7671971 | B2 | 02 March 2010 |
| | | | | EP | 1797457 | A1 | 20 June 2007 |
| | | | | EP | 1797457 | B1 | 24 August 2016 |
| | | | | AU | 2005293591 | A1 | 20 April 2006 |
| | | | | AU | 2005293591 | A2 | 29 October 2009 |
| US | 2023014034 | A1 | 19 January 2023 | WO | 2023287587 | A1 | 19 January 2023 |
| | | | | US | 11874404 | B2 | 16 January 2024 |
| CN | 105453421 | A | 30 March 2016 | WO | 2016000169 | A1 | 07 January 2016 |
| | | | | CN | 105453421 | B | 07 December 2018 |
| CN | 112639528 | A | 09 April 2021 | | None | | |

Form PCT/ISA/210 (patent family annex) (July 2022)

**EP 4 653 915 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310104626